# EUROPÄISCHE PATENTSCHRIFT

(11) **EP 2 520 148 B1**
(45) Veröffentlichungstag und Bekanntmachung des Hinweises auf die Patenterteilung: **14.08.2024**
(21) Anmeldenummer: 12002983.0
(22) Anmeldetag: 27.04.2012
(51) Int. Cl.: A01C 7/10, G01N 22/00

(54) **Verfahren zur Messung eines Gutstroms mittels Microwellen, Sensoranordnung und Vorrichtung mit einer Sensoranordnung**
Method for measuring a flow of goods by means of microwaves, sensor assembly and device with a sensor assembly
Procédé de mesure d'un flux de matière au moyen de micro-ondes, agencement de capteur et dispositif doté d'un agencement de capteur

(30) Priorität: 02.05.2011 DE 102011100244; 01.07.2011 US 201161571660 P; 13.01.2012 US 201261586297 P
(43) Veröffentlichungstag der Anmeldung: 07.11.2012
(73) Patentinhaber: MSO Messtechnik und Ortung GmbH, 53902 Bad Münstereifel-Schönau (DE)
(72) Erfinder: Hien, Peter, 53902 Bad Münstereifel (DE)
(74) Vertreter: Limbeck, Achim

(56) Entgegenhaltungen:
- EP-A1- 0 843 959
- GB-A- 2 082 006
- US-A- 4 239 010
- US-A- 4 246 469
- US-A- 5 644 244
- US-A- 5 708 366
- US-B1- 6 346 888

## Beschreibung

### Technisches Gebiet

Die Erfindung betrifft ein Verfahren für landwirtschaftliche Sä- und Streumaschinen zur Messung eines Gutstroms gemäß Anspruch 1, und eine Landwirtschaftiche Sä- oder Streumaschine gemäß Anspruch 2.

In zahlreichen industriellen Anwendungen werden Gutströme gefördert. Bei dem geförderten Material handelt es sich um Teilchen, wie z.B. Körner, Granulate, Schrote, grobkörnige Pulver etc. Anwendungsbeispiele sind die pneumatische oder frei fallende Förderung von Körnern, Granulaten, Pulver und Schroten in z. B. landwirtschaftlichen Sämaschinen und pneumatischen Düngerstreuern bzw. Schleuderstreuern, der Lebensmittel- und Futtermittelindustrie, der Baustoffindustrie oder in der Produktion, wie beispielsweise die Förderung von Kunststoffgranulat zu Spritzgussmaschinen.

Ein Anwendungsbereich aus dem Stand der Technik, auf den im Folgenden näher eingegangen werden soll, sind landwirtschaftliche Sämaschinen. Bei Einzelkornsämaschinen ist jedem Säschar eine Dosiereinheit z. B. für Mais, Bohnen, pillierte Zuckerrübensamen oder ähnliches zugeordnet. Bei sogenannten Drillmaschinen hingegen wird das Saatgut, z. B. Getreide aller Art, Rapssamen, Grassamen oder Ähnliches, aus einem Behälter proportional zur Fahrgeschwindigkeit über eine Dosiereinheit einem Verteilsystem zugeteilt. Das Saatgut wird in der Folge entweder frei fallend, sogenannter mechanischer Sämechanismus, oder mittels Luftstrom, sogenannter pneumatischer Sämechanismus, durch eine Vielzahl von Leitungen zu den Säscharen gefördert. Bei pneumatischen Drillmaschinen wird im Allgemeinen das Saatgut von einer Dosiereinheit über eine Hauptleitung im Luftstrom in kugelsegmentförmige Verteilköpfe von unten eingeblasen. Im Verteilkopf wird der Gutstrom in Säleitungen verteilt. Die Säleitung, die sogenannte Saatpfeife, fördert das Saatgut zu jeweils einem Säschar, welches das Saatgut im Boden ablegt. Hierbei wird eine Vielzahl von Säscharen eingesetzt, z. B. bei einem Säscharabstand von 15 cm entsprechend 60 Säschare bei 9 m Arbeitsbreite. Die Dosierung des Saatguts erfolgt entsprechend einer Kalibrierung proportional zur Fahrgeschwindigkeit, so dass eine bestimmte Verteilung bezüglich Masse oder Anzahl der Saatkörner pro Flächeneinheit erreicht wird. Bei der Beurteilung der Verteilung ist die Längs-, d. h. die Verteilung in Fahrtrichtung, von der Querverteilung, d. h. die Verteilung über die Arbeitsbreite der Maschine, zu unterscheiden.

Ein weiterer Anwendungsbereich sind Streumaschinen ("Schleuderstreuer"). Hierbei wird granuliertes Material meist von einer sich drehenden Scheibe geschleudert und so flächig verteilt.

Problematisch beim Einsatz pneumatischer Sämaschinen sind: die Erfassung einer allmählichen oder teilweisen Blockade bzw. Verstopfung der Leitung, die Messung des tatsächlichen Durchsatzes, d. h. der Masse und/oder der Anzahl der Körner pro Zeiteinheit, und die Verteilgenauigkeit in Längs- und Querverteilung.

Aus dem Stand der Technik sind zahlreiche Lösungen bekannt, um einen Gutstrom zu erfassen. Insbesondere bei Sämaschinen sind folgende Sensoren bekannt: optische Sensoren, die reflektiv oder transflektiv mit einem oder mehreren Lichtdetektoren, z. B. einem Phototransistor, wirken, mechanische Sensoren wie einen Stift im Gutstrom mit angekoppeltem Piezoelement zur Zählung auftreffender Partikel, Körperschallsensoren zur Messung des Körperschalls beim Auftreffen von Körperchen, die Messung der Impulsenergie beim Auftreffen auf ein Piezoelement oder eine Array aus Piezoelementen, radiometrische Sensoren mit Strahlungstransmission und Szintillationsdetektor, Ultraschallsensoren zur Messung der vom Gutstrom reflektierten Energie und kapazitive Sensoren als amplitudenbestimmendes Element in einer Oszillatorschaltung wie beispielsweise in der US 4,782,282 beschrieben.

Auch eine Verwendung von Mikrowellenabsorption durch den Gutstrom, sogenannte TEM Transversal-Elektromagnetische Mode, im Hohlraumresonator wie in US 4,246,469 beschrieben wurden vorgeschlagen.

Hiervon finden in der aktuellen Praxis am häufigsten optische Sensoren zur Blockadeerkennung und Zählung meist grosser Saatkörner, z. B. Mais, Sojabohnen, in Einzelkornsämaschinen Verwendung.

Problem bei der Blockadeerkennung ist, dass diese nur auf vollständig oder weitgehend verstopfte Leitungen anspricht. Tritt eine Blockade des Säschares auf, so wird diese erst erkannt, wenn das Rohr bis zur Messstelle mit Material angefüllt ist. Teilblockaden mit verringertem Durchsatz sind schwer zu erkennen.

Die Zählung, d. h. die Durchsatzerfassung, ist meist nur bei grossen Saatkörnern wie Mais und Sojabohnen möglich. Die Zählung der Körner mittels optischer Sensoren ist fehlerbehaftet, da Dopplungen durch überlappende Körner auftreten können. Eine sichere optische Zählung ist technisch sehr aufwändig.

Aus US 6,346,888 B1 ist ein kapazitives Messverfahren bekannt, welches elektromagnetische Energie mit einer vorab bestimmten Frequenz und Amplitude in eine Messkammer ausbreitet. Der elektromagnetische Messwertgeber erfasst dabei die Signalveränderungen der elektromagnetischen Energie in der Messkammer, welche durch die Störung des elektromagnetischen Energiefeldes und der Passage des Analytikums verursacht wird. Die Quelle der elektromagnetischen Energie verbreitet (propagates) hierzu nicht-resonante elektromagnetische Energie in vorab material-spezifisch festzulegender Frequenz und Amplitude in die Messkammer.

Die US 6,346,888 B1 offenbart des Weiteren unter dem Oberbegriff spezifische Gestaltungen möglicher Anwendungen des Materialsensors und Bestimmungen der Durchflussrate von Substanzen, welche als Kontinuum fließen, unter Nutzung der Doppler Technik. Hierbei wird das frequenzverschobene Empfangssignal mit der Geschwindigkeit und so mit der Durchflussrate in Beziehung gebracht. US 6,346,888 B1 offenbart mithin nur und ausschließlich die Nutzung der entstehenden Dopplerfrequenz zur Geschwindigkeitsmessung der als Kontinuum fließenden Substanz und der damit zusammenhängenden Durchflussrate.

Die US 5,644,244 A offenbart ein Verfahren zur Bestimmung des Verhältnisses von festen zu flüssigen Substanzen mittels Phasenverschiebung von Referenz- und Test-Mikrowellen.

In der EP 0 843 959 A1 wird das Doppler-Radarverfahren zur Messung des Parameters "Geschwindigkeit" des durchströmenden Gutes vorgetragen, wobei zur Erfassung der Schichtdicke des Gutstroms eine weitergehende Auswertung der reflektierten Strahlung hinsichtlich der Schichtdicke erfolgt.

Aufgabe der vorliegenden Erfindung ist es, Verfahren und Sensoranordnungen aus dem Stand der Technik zu verbessern.

Nach einem ersten Aspekt der Erfindung löst diese Aufgabe ein Verfahren für landwirtschaftliche Sä- und Streumaschinen zur Messung eines Gutstroms gemäß Anspruch 1.

Das zu sensierende Gut bewegt sich durch das gesendete Mikrowellensignal. Dieses Signal wird von dem zu sensierenden Gut diffus teilweise zurückgestreut bzw. reflektiert. Auf Grund des Dopplereffekts ist die Frequenz der reflektierten Welle proportional zur Geschwindigkeit des Guts verschoben. Durch eine Mischung des Sende- und des Empfangssignals entsteht das auszuwertende niederfrequente Schwebungssignal.

Erfindungsgemäß wird aus der Amplitude des Schwebungssignals die Gutstrommenge berechnet. Dies ist möglich, da die Amplitude des Schwebungssignals proportional zur Gutstrommenge bzw. zur Grösse der Teilchen ist.

Weiter kann aus der Frequenz des Schwebungssignals die Gutgeschwindigkeit berechnet werden. Dies ist möglich, da die Frequenz des Schwebungssignals proportional zur Gutgeschwindigkeit ist.

Ein weiterer Aspekt der Erfindung betrifft eine Landwirtschaftiche Sä- oder Streumaschine gemäß Anspruch 2.

Hierbei ist die Landwirtschaftiche Sä- oder Streumaschine mit der Sensoranordnung zur Messung eines Gutstroms aus Teilchen mittels Mikrowellen mit einem Mikrowellensender und einem Mikrowellenempfänger so ausgestaltet, dass der Sender und der Empfänger so angeordnet sind, dass die Mikrowellen durch den Sender in einen Gutstrom gesendet werden und von dem Gutstrom auf den Empfänger reflektiert werden. Die Sensoranordnung aus Mikrowellensender und Mikrowellenempfänger sendet kontinuierlich elektromagnetische Wellen. Das zu sensierende Gut bewegt sich durch die ausgesandten Wellen. Die vom Sender ausgesandten elektromagnetischen Wellen werden von dem zu sensierenden Gut diffus teilweise zurückgestreut bzw. reflektiert. Durch die Überlagerung entsteht am Empfänger das Schwebungssignal, das dann entsprechend des erfindungsgemässen Verfahrens ausgewertet werden kann.

Von Vorteil ist, wenn der Sender Mikrowellen mit einer Frequenz von 0,2 GHz bis 600 GHz, insbesondere von 0,3 GHz bis 300 GHz, abstrahlt. Die Erfindung ist jedoch auch für Frequenzen von über 300 GHz anwendbar.

Sender und Empfänger senden bzw. empfangen elektromagnetische Wellen mittels Antennen. Diese können daher Antennen aufweisen. Vorteilhafterweise sind die Antennen als planare oder Punktstrahlerantennen mit einer den Gutstrom abdeckenden Hauptkeule der Abstrahlcharakteristik ausgebildet.

Vorteilhafter Weise kann sich der Gutstrom frei fallend, geworfen oder fliessend bewegen.

Weiter von Vorteil ist, wenn die Sensoranordnung eine Leitung für den Gutstrom aufweist. Sender und Empfänger können dann in einem Winkel zum Leitungsverlauf angebracht werden, so dass von einer Antenne kontinuierlich elektromagnetische Wellen durch die Leitung gesendet werden.

Es ist auch möglich, mehrere Sensoranordnungen an einer Leitung anzubringen. Diese können beispielsweise versetzt oder übereinander angeordnet werden. Auch eine Anordnung in einem rechten Winkel ist denkbar. Bei dieser ist die Berechnung einer Kreuzkorrelation möglich.

Jede Leitung kann eine pneumatische Förderung für den Gutstrom aufweisen. Bei einer pneumatischen Förderung wird das Gut durch Druckluft transportiert. Diese wird durch Komprimieren der Umgebungsluft in einem Kompressor erzeugt. Dadurch ist die Geschwindigkeit des transportierten Guts zu bestimmen. Zudem ist auch ein Transport entgegen der Schwerkraft möglich.

Alternativ kann die Leitung abfallend angeordnet sein. Das Saatgut kann so durch die Schwerkraft transportiert werden.

Von Vorteil ist weiter, wenn die Leitung aus einem für das Mikrowellensignal durchlässigen Material besteht. Dies kann insbesondere jedes nicht-metallische Material sein. Durch das Verfahren sowie durch eine erfindungsgemässe Sensoranordnung ist sowohl eine quantitative Erfassung als auch eine Zählung der Teilchen eines in Bewegung befindlichen Gutstroms bestehend aus Teilchen, sogenanntes particulate material, in einem Leitungssystem mit hoher Genauigkeit möglich.

Die Maschine kann eine Sämaschine sein.

Von Vorteil ist, wenn es sich bei der Vorrichtung um eine Sämaschine handelt, wenn sie ein Särohr aufweist, das eine Sensoranordnung aufweist. Werden mehrere Sensoranordnungen an mehreren Särohren vorgesehen, so ist eine exakte Überwachung und Erfassung der Längs- und Querverteilung möglich.

Schliesslich umfasst ein letzter Aspekt der Offenbarung eine Verwendung eines monostatischen Dauerstrichradars zur Messung eines in Bewegung befindlichen Gutstroms aus Teilchen oder einer Flüssigkeit, wobei die Teilchen oder Flüssigkeit quantitativ erfasst werden und/oder gezählt werden.

Das Dauerstrichradar kann frequenz- oder amplitudenmoduliert sein. Auch eine Verwendung eines gepulsten Radars ist möglich.

Zusammenfassend hat der erfinderische Gedanke der vorliegenden Anmeldung folgende Vorteile:
Die hochauflösende Messung ermöglicht die Erfassung der Durchsatzmenge und die Zählung von Teilchen. Eine Messung an allen Särohren einer Sämaschine ermöglicht eine exakte Überwachung und Erfassung der Längs- und Querverteilung. Eine Detektion einer Teilblockade mit Verringerung des Durchsatzes an einzelnen Särohren ist nicht erst bei vollständiger Füllung des Särohres bis zur Messstelle auf Grund der Blockade möglich. Weiter ist eine Detektion und Überwachung der Abschaltung des Saatgutflusses in einzelnen Leitungen bei der Anlage von Fahrgassen möglich. Die Messbarkeit des Durchsatzes in einzelnen Leitungen eröffnet zusammenfassend also Optimierungspotentiale durch eine Blockadeerkennung in einem frühen Stadium und die Überwachung, Steuerung und Regelung der Längs- und Querverteilung.

Weiter vereinfacht die Zählbarkeit der Einzelkörner wesentlich die Kalibrierung und Einstellung der Sämaschine. Ein Kalibriervorgang mit Verwiegung kann entfallen.

Eine Erkennung von Dopplungen und Mehrfachbelegungen durch überlappende Körner anhand der Signalamplitude ist möglich.

Durch Ausgestaltung als Sensoranordnung ist eine einfache Montage und Nachrüstung an bestehenden Maschinen ohne konstruktive Änderungen denkbar. Es sind keine Veränderungen notwendig, da keine Einbauten im Förderweg erfolgen. Die Sensoranordnung wird vielmehr von aussen an der vorhandenen Leitung anliegend angebracht.

Im Gegensatz zu optischen Sensoren ist die vorgeschlagene Anordnung unempfindlich gegenüber Verschmutzung. Sie ist weiter vergleichsweise einfach in der Konstruktion und kostengünstig herzustellen.

Die Erfindung wird nachfolgend anhand eines Ausführungsbeispiels unter Bezugnahme auf die Zeichnungen näher erläutert.

Hierin zeigen:
Fig.1 : eine Prinzipskizze einer Schaltung für eine Sensoranordnung,
Fig.2 : ein Dopplersignal eines einzelnen Korns, aufgenommen bei freiem Fall durch eine Leitung vor dem Radar Frontend,
Fig.3 : ein Dopplersignal eines Körnergutstroms,
Fig.4 : eine schematische Darstellung einer Sensoranordnung mit einer Leitung in Seitenansicht, und
Fig.5 : eine schematische Darstellung einer Sensoranordnung mit einer Leitung in Draufsicht.

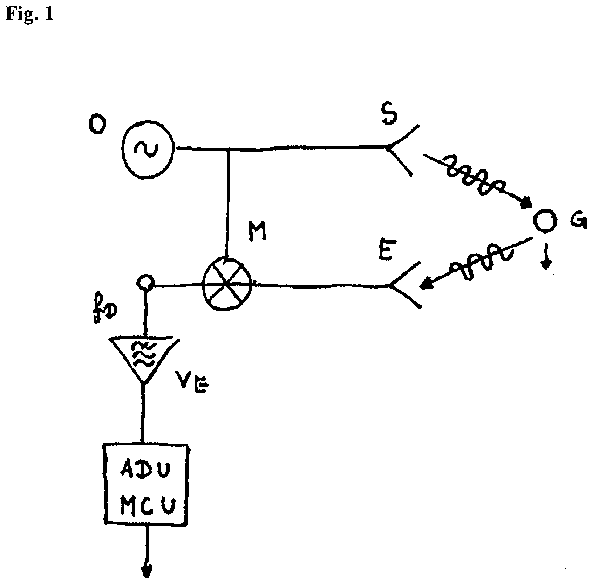

Wie auf der Prinzipskizze in Figur 1 erkennbar, wird das vom Oszillator O erzeugte Mikrowellensignal über den Sender auf das Gut G gesendet. Ein Teil dieses Signals wird auf die Empfangsantenne E reflektiert. Durch einen Mischer M werden die beiden Signale überlagert. Hieraus entsteht das Dopplerfrequenzsignal fD, welches durch einen Verstärker bzw. Filter VE verstärkt wird. Nach der Verarbeitung in einem Analog-DigitalUmsetzer ADU und einem Mikrocontroller MCU wird das Ergebnis ausgegeben.

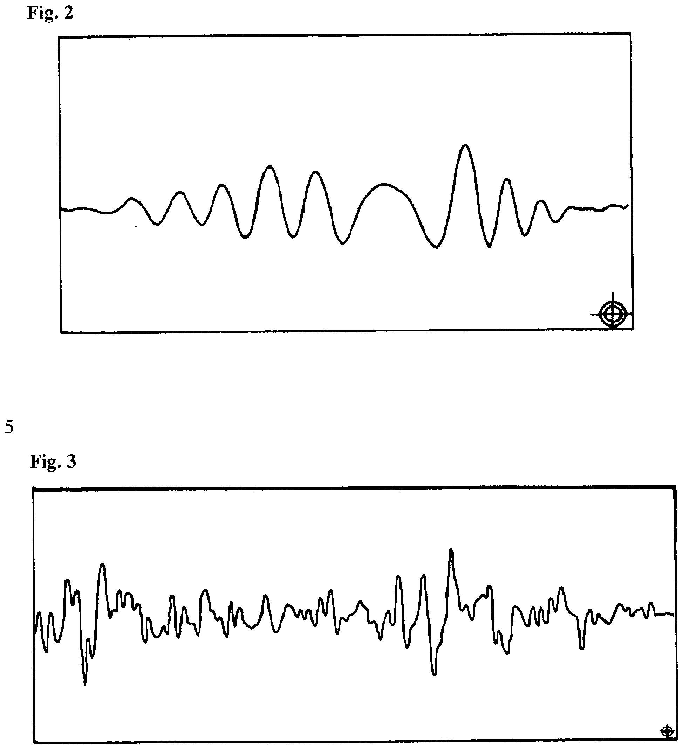

Die Figuren 2 und 3 zeigen Beispiele eines solchen Dopplersignals fD.

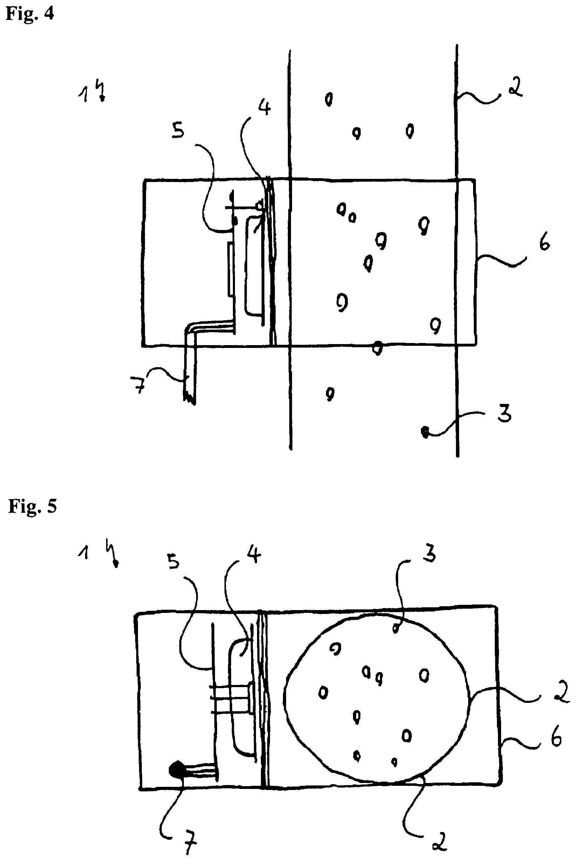

Die in Figur 4 und Figur 5 dargestellte Sensoranordnung 1 ist mit einem Rohr 2 verbunden. In dem Rohr 2 wird ein Gutstrom mit einzelnen Körnern 3 gefördert. Die Sensoranordnung mit einem Radar Frontend 4, das mit einer elektronischen Schaltung 5 auf einer Platine verbunden ist, ist in einem Metallgehäuse 6 angeordnet. Durch ein Kabel 7 werden die Messergebnisse des Radar Frontends 4, die durch die Elektronik 5 verarbeitetet wurden, weitergeleitet.

## Patentansprüche

1. Verfahren für landwirtschaftliche Sä- und Streumaschinen zur Messung eines Gutstroms aus separaten Teilchen mittels Mikrowellen, wobei mittels eines Mikrowellen-Dopplereffekts eine Messung der Menge eines Gutstroms erfolgt, **dadurch gekennzeichnet, dass** ein gesendetes Mikrowellensignal und ein vom Gut reflektiertes Empfangssignal überlagert werden und das sich daraus ergebende niederfrequente Schwebungssignal gemessen wird, wobei aus der Amplitude des Schwebungssignals die Gutstrommenge berechnet wird, wobei die Amplitude des Schwebungssignals proportional zur Gutstrommenge ist.

2. Landwirtschaftiche Sä- oder Streumaschine mit einer Sensoranordnung und Mitteln, die so angepasst sind, dass sie die Schritte des Verfahrens nach Anspruch 1 ausführen, wobei die Sensoranordnung ausgestaltet ist zur Messung eines Gutstroms aus Teilchen mittels Mikrowellen mit einem Mikrowellensender und einem Mikrowellenempfänger, wobei der Sender und der Empfänger so angeordnet sind, dass die Mikrowellen durch den Sender in einen Gutstrom gesendet werden und von dem Gutstrom auf den Empfänger reflektiert werden.

3. Landwirtschaftiche Sä- oder Streumaschine nach Anspruch 2, **dadurch gekennzeichnet, dass** der Sender und der Empfänger Antennen aufweisen, wobei eine Antenne als planare Antenne ausgebildet ist.

4. Landwirtschaftiche Sä- oder Streumaschine nach Anspruch 3, **dadurch gekennzeichnet, dass** eine Antenne als Punktstrahler mit den Gutstrom abdeckender Hauptkeule der Abstrahlcharakteristik ausgebildet ist.

5. Landwirtschaftiche Sä- oder Streumaschine nach einem der Ansprüche 2 bis 4, **dadurch gekennzeichnet, dass** sie eine Sämaschine ist und ein Särohr aufweist, das eine Sensoranordnung aufweist.

## Claims

1. Method for agricultural seeders and spreaders to measure a crop flow composed of separate particles
using microwaves;
the quantity of a product flow is measured by means of a microwave Doppler effect, **characterized in that** a transmitted microwave signal and a received signal reflected by the product are superimposed and the resulting low-frequency beat signal is measured, the quantity of product flow being calculated from the amplitude of the beat signal, the amplitude of the beat signal being proportional to the quantity of product flow.

2. An agricultural seed drill or spreader comprising a sensor arrangement and means which are adapted to carry out the steps of the method according to claim 1, the sensor arrangement being designed to measure a particle crop flow by means of microwaves with a microwave transmitter and a microwave receiver, wherein
the transmitter and the receiver are arranged in such a way that the microwaves are sent by the transmitter in a stream of goods and are reflected by the stream of goods back to the receiver.

3. Agricultural seed drill or spreader
according to claim 2, **characterised in that**
the transmitter and receiver have antennas, an antenna being designed as a flat antenna.

4. Agricultural seed drill or spreader
according to claim 3, **characterised in that**
that an antenna is designed as a point emitter with a main lobe of the radiation characteristic covering the good current.

5. Agricultural seed drill or spreader according to any one of claims 2 to 4,
**characterised in that**
it is a seed drill and comprises a seed tube which includes a set of sensors.

## Revendications

1. Méthode pour semoirs et épandeurs agricoles pour mesurer un flux de récolte composé de particules séparées
au moyen de micro-ondes ;
une mesure de la quantité d'un courant de produit étant effectuée au moyen d'un effet Doppler de micro-ondes, **caractérisé en ce qu'**un signal de micro-ondes émis et un signal de réception réfléchi par le produit sont superposés et le signal de battement à basse fréquence qui en résulte est mesuré, la quantité de courant de produit étant calculée à partir de l'amplitude du signal de battement, l'amplitude du signal de battement étant proportionnelle à la quantité de courant de produit.

2. Semoir ou épandeur agricole comportant un agencement de capteurs et des moyens qui sont adaptés pour exécuter les étapes du procédé selon la revendication 1, l'agencement de capteurs étant conçu pour mesurer un flux de récolte de particules au moyen de micro-ondes avec un émetteur de micro-ondes et un récepteur de micro-ondes, dans lequel l'émetteur et le récepteur sont disposés de telle sorte que les micro-ondes sont envoyés par l'émetteur dans un flux de bien et sont réfléchis par le flux de bien sûr le récepteur.

3. Semoir ou épandeur agricole
selon la revendication 2, **caractérisé en ce que**
l'émetteur et le récepteur présentent des antennes, une antenne étant conçue comme une antenne plane.

4. Semoir ou épandeur agricole
selon la revendication 3, **caractérisé en ce**
**qu'**une antenne est conçue comme un émetteur ponctuel avec un lobe principal de la caractéristique de rayonnement couvrant le courant bon.

5. Semoir ou épandeur agricole selon l'une quelconque des revendications 2 à 4,
**caractérisé en ce**
**qu'**elle est un semoir et comprend un tube de semis qui comporte un ensemble de capteurs.
